Europäisches Patentamt

European Patent Office

Office européen des brevets

(11) Publication number: **0 297 850 B1**

(12) **EUROPEAN PATENT SPECIFICATION**

(45) Date of publication of patent specification: **09.12.92**

(51) Int. Cl.⁵: **C21C 7/10**

(21) Application number: **88305909.9**

(22) Date of filing: **29.06.88**

(54) Method and apparatus for degassing molten metal utilizing RH method.

(30) Priority: **29.06.87 JP 159699/87**

(43) Date of publication of application:
**04.01.89 Bulletin 89/01**

(45) Publication of the grant of the patent:
**09.12.92 Bulletin 92/50**

(84) Designated Contracting States:
**DE FR GB SE**

(56) References cited:
**GB-A- 920 874**
**GB-A- 954 214**
**JP-A-51 006 103**
**JP-A-51 071 202**
**US-A- 3 320 053**

**PATENT ABSTRACTS OF JAPAN, volume 7, no. 83 (C-160)[1228], 7th April 1983**

**PATENT ABSTRACTS OF JAPAN, volume 10, no. 23 (C-325)E2080], 29th January 1986; & JP - A - 60 177 122 (SHIN NIPPON SEITETSU K.K.) 11-09-1985**

**PATENT ABSTRACTS OF JAPAN, volume 9, no. 74 (C-273)[1797], 3rd April 1985**

(73) Proprietor: **KAWASAKI STEEL CORPORATION No. 1-28, 1-Chome Kitahonmachi-Dori Chuo-Ku, Kobe-Shi Hyogo 651(JP)**

(72) Inventor: **Takahashi, Kiyoshi Kawasaki Steel Corporation**
**Mizushima Works Kawasaki-dori 1-chome**
**Mizushima Kurashiki-shi Okayama-ken(JP)**
Inventor: **Takashiba, Nobuyoshi Kawasaki Steel Corporation**
**Mizushima Works Kawasaki-dori 1-chome**
**Mizushima Kurashiki-shi Okayama-ken(JP)**
Inventor: **Kojima, Shinji Kawasaki Steel Corporation**
**Mizushima Works Kawasaki-dori 1-chome**
**Mizushima Kurashiki-shi Okayama-ken(JP)**
Inventor: **Okuda, Haruji Kawasaki Steel Corporation**
**Mizushima Works Kawasaki-dori 1-chome**
**Mizushima Kurashiki-shi Okayama-ken(JP)**
Inventor: **Ohmiya, Shigeru Kawasaki Steel Corporation**
**Mizushima Works Kawasaki-dori 1-chome**
**Mizushima Kurashiki-shi Okayama-ken(JP)**

Inventor: **Ikeda, Ryuichi Kawasaki Steel Corporation**
**Mizushima Works Kawasaki-dori 1-chome**
**Mizushima Kurashiki-shi Okayama-ken(JP)**

(74) Representative: **Overbury, Richard Douglas et al**
**HASELTINE LAKE & CO Hazlitt House 28**
**Southampton Buildings Chancery Lane**
**London WC2A 1AT(GB)**

## Description

The present invention relates generally to a technique for the degassing of molten metal to produce high purity metal products, such as extra low carbon steel. More specifically, the invention relates to a method and apparatus for degassing molten metal utilizing the RH method.

Recently, the requirement for high quality metal has substantially increased. Some kinds of metal require vacuum degassing treatment for removing impurities to improve quality. To respond to such a requirement, it is desired to develop a method and apparatus which allows high efficiency in the degassing treatment and a lower tapping temperature in the converter to lower the production cost.

It is well known to introduce molten metal in a ladle into a vacuum chamber where it is subjected to vacuum to remove carbon and other impurities. For example, Japanese Patent First (unexamined) Publication (Tokkai) Showa 51-71202, published on June 19, 1976, discloses a vacuum degassing treatment for molten metal utilizing the apparatus set forth above. The disclosed apparatus has an induction pipe immersed into the molten metal in the ladle for introducing the molten metal into the vacuum chamber from the ladle, and a return pipe to return the molten metal from the vacuum chamber to the ladle. The induction pipe and the return pipe are oriented in spaced apart relationship to each other so that the molten metal in the vacuum chamber flows from the discharge outlet of the induction pipe to the return inlet of the return pipe in the vacuum chamber. By this construction, the molten metal can be maintained for a longer period in the vacuum chamber to remove a greater amount of impurities. Such a method is known as the "Ruhrstahl Hausen (RH) method". In such a case, the efficiency of the removal of impurities is variable depending upon the circulation rate of the molten metal in the vacuum chamber and the surface area of the molten metal in direct contact with the vacuum atmosphere in the vacuum chamber. In the RH method, an inert gas, such as Ar gas, is blown into the induction pipe for circulating the molten metal in the ladle into the degassing chamber. The inert gas bubbles serve not only to circulate the molten metal in the degassing or vacuum chamber but also to provide a greater surface area in the chamber by bubbling at the surface. Therefore the use of such gas blow technology in the RH method results in a more efficient impurity removal.

As will be naturally appreciated, in order to increase the circulation rate of the molten metal, it is important to increase the gas flow rate through the induction pipe. To increase the gas circulation rate, it is necessary to provide a wider path area in the induction pipe connecting the ladle and the vacuum chamber. However, the path area of the induction pipe is limited by the internal diameter of the vacuum chamber. Therefore, in order to expand the path area, it becomes necessary to expand the diameter of the vacuum chamber, which involves the re-construction of other associated facilities.

On the other hand, in the usual degassing process, the pressure of the gas blown into the molten metal is limited to be lower than or equal to 9.9 $kg/cm^2$. Such relatively low pressure gas is blown into the molten metal and introduced into the vacuum chamber via an induction pipe of 3 to 5 mm diameter. In practice, 8 to 20 gas discharge pipes or nozzles are circumferentially arranged around the ladle for blowing the gas. However, bubbles are formed only around the periphery of the induction pipe whereas the central zone of the induction pipe is not in a bubbled condition. Such flow of bubbles in the induction pipe will be hereafter referred to as "peripheral bubble flow". Peripheral bubble flow is produced in the conventional art and is not at all effective to improve the efficiency of impurity removal to the degree required or expected.

In order to overcome this drawback of the prior art, Japanese Patent First Publication (Tokkai) Showa 51-6103, published on January 19, 1976, discloses an apparatus which directs the blown inert gas to the vicinity of the central axis of the induction pipe. This was successfully introduced for the purpose of forming bubbles at the central portion of the induction pipe and thus improving impurity removal efficiency. Such flow of bubbles will be hereafter referred to as "center bubble flow". However, this still has some drawbacks. For instance, since the gas nozzle has to be introduced into the molten metal in the ladle, it is subjected to substantial heat and this shortens the life of the nozzle. Furthermore, since the nozzle is subjected to substantial heat, replacement of the nozzle for repairing is difficult and requires an unacceptably long period. In addition, such center bubble type flow tends to cause temperature fluctuation at the peripheries of the vacuum chamber and the induction pipe thus causing spalling of the refractory material therein.

Therefore, it is an object of the present invention to provide a method and apparatus which may solve the problems encountered in the conventional art.

Another object of the invention is to provide a method and apparatus for removing impurities including carbon for producing extra low carbon metal, which can reasonably improve the efficiency of the degassing treatment.

In order to achieve the aforementioned and other objects and advantages, the method and apparatus for vacuum degassing, according to the invention, blow gas into the molten metal so as to form a substantially uniform distribution of bubbles over the path area defined by the induction pipe. In order to achieve this, the discharge nozzles are separated into at least two groups. The gas pressure to be discharged through the discharge nozzles in different groups is controlled independently of the other so that gas blown through the first group of nozzles forms bubbles at around the central portion of the induction pipe. The pressure of the gas blown through the second group of nozzles is adjusted so as to form bubbles in the vicinity of the periphery of the induction pipe.

GB-A-920 874 describes a vacuum degassing technique for molten metal wherein a degassing chamber connected to a vacuum is located above a container for the molten metal. First and second vertical paths are provided for supplying molten metal from the container to the degassing chamber and for returning molten metal from the degassing chamber to the container. Gas discharging means are provided to introduce inert gas into the first path at at least two positions at different levels. Although different quantities of gas may be introduced at these positions, there is no suggestion to control the gas pressures independently to obtain a uniform distribution of gas across the path.

According to one aspect of the present invention, there is provided a method for blowing gas into molten metal in an apparatus for degassing molten metal which includes a container containing a molten metal, a degassing chamber arranged above the container and connected to a vacuum source, a first path for supplying the molten metal from the container to the degassing chamber, a second path for returning the molten metal from the degassing chamber to the container, and first and second gas discharge nozzles connected to the first path upstream of the degassing chamber for discharging gas into the molten metal, said method comprising the steps of:

reducing the pressure in said degassing chamber by means of said vacuum source;

introducing a high pressure gas into said first path through said first gas discharge nozzles, and

introducing a low pressure gas into said first path through said second gas discharge nozzles

characterised in that the pressures of said high pressure gas and said low pressure gas are controlled independently of each other so as to establish a uniform distribution of gas across said first path.

The high pressure gas and the low pressure gas may be discharged transversely to the flow direction of the molten metal at the positions where the high pressure gas and the low pressure gas are introduced.

Preferably, the method further comprises the step of connecting the degassing chamber with the container by first and second vertical paths, the first vertical path being arranged upstream of the degassing chamber for introducing molten metal from the container to the degassing chamber and the second vertical path being arranged downstream of the degassing chamber for recirculating the molten metal from the degassing chamber to the container. In this case the high and low pressure gas discharge nozzles are arranged to discharge the high and low pressure gases in substantially horizontal directions.

In a preferred embodiment, the high and low pressure gases to be discharged into the molten metal comprise inert gas. Further the inert gas preferably contains a given amount of oxygen. On the other hand, the pressure of the high pressure gas is variable depending upon the distance the pressurized gas has to reach since the high pressure gas is intended to be blown into the central portion of the first vertical path. Therefore, the pressure of the high pressure gas may be variable depending upon the diameter of the first path. In a generalized consideration, the gas pressure of the high pressure gas can be illustrated by:

$$P = K \times d^i \times D^j$$

where
P is the gas pressure ($kg/cm^2$);
K is in a range of 0.15 to 0.80
i is $3.8/d + 1$
j is $2/3$
d is the discharge nozzle diameter (mm); and
D is the diameter of the first path.

In a preferred embodiment, the pressure of the high pressure gas may be in a range of from about 30 $kg/cm^2$ to about 50 $kg/cm^2$ and the pressure of the low pressure gas may be in a range of from the static pressure of the molten metal to 9.9 $kg/cm^2$.

According to another aspect of the present invention there is provided an apparatus for degassing molten metal comprising: a container for containing molten metal; a degassing chamber arranged above said container and connected to a vacuum source for maintaining a vacuum in the container; a first path for supplying said molten metal from said container to said degassing chamber; a second path for returning said molten metal from said degassing chamber to said container; a high pressure gas discharging means for discharging a high pressure gas into said molten metal in said first path, a low pressure gas discharging means for discharging a low pressure gas into said molten metal in said first path, and means provided to control the pressures of said high pressure gas and said low pressure gas independently of each other characterised in that said high pressure gas discharging means has a smaller gas flow area than that of said low pressure gas discharging means.

The high pressure gas discharging means has a smaller gas flow area than that of the low pressure gas discharging means so as to achieve uniformity of gas flow rate in the gas discharged from the high and low pressure gas discharging means. In the preferred construction, the high pressure gas discharging means comprises a plurality of first nozzles arranged in circumferential alignment and the low pressure gas discharging means comprises a plurality of second nozzles in circumferential alignment. The first and second nozzles are vertically arranged at mutually different elevations. More specifically, the first nozzles circumferentially arranged in alignment are oriented at a lower elevation than that of the second nozzles circumferentially arranged in alignment. The first and second nozzles may have axes extending substantially transverse to the axis of the first path.

The present invention will be understood more fully from the detailed description given herebelow and from the accompanying drawings of a preferred embodiment of the invention, which, however, should not be taken to limit the invention to the specific embodiment but are for explanation and understanding only.

In the drawings:

Fig. 1 is a sectional view of a preferred embodiment of an RH degassing apparatus according to the present invention;

Fig. 2 is an enlarged section of the major part of the RH degassing apparatus of Fig. 1;

Figs. 3a and 3b are illustrations of water-utilizing models showing the relationship between bubble formation and the pressure of the gas being discharged;

Figs. 4(a) and 4(b) are graphs showing the variation of the molten metal circulation rate in the vacuum chamber in relation to the blown gas flow rate;

Fig. 5 is an explanatory illustration of a portion around the discharge outlet of a discharge nozzle in a degassing apparatus;

Fig. 6 is a graph showing the variation of the molten metal flow rate relative to the gas flow rate; when argon and an argon/oxyen mixture are used, and

Fig. 7 is a graph showing the variation of the size of the mushroom formed around the discharge outlet of the discharge nozzle with gas flow rate when the gases used in Fig. 6 are used.

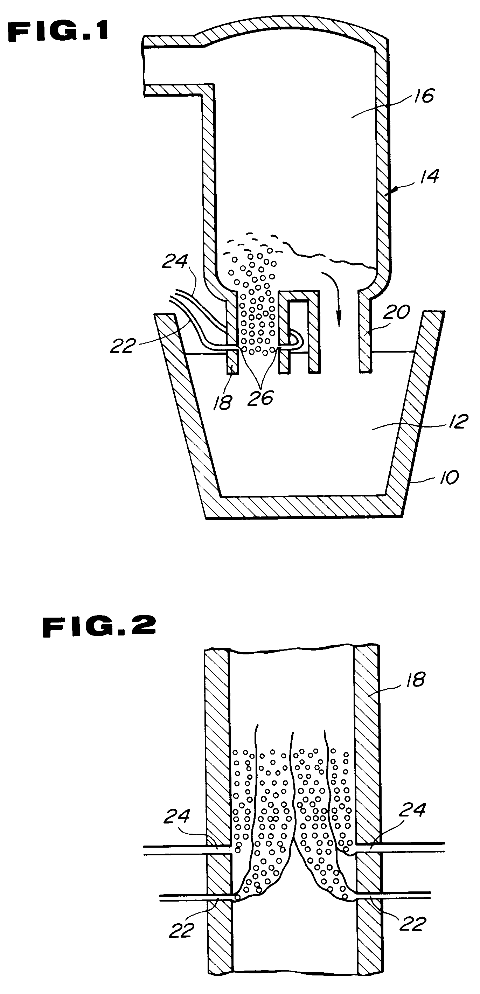

Referring now to the drawings, and particularly to Figs. 1 and 2, the preferred embodiment of an RH degassing apparatus according to the invention, has a molten metal container 10, such as a molten metal ladle, containing molten metal 12, and a degassing apparatus 14 which defines a degassing chamber 16 therein. The degassing chamber 16 is connected to a vacuum pressure source (not shown) to be maintained at a vacuum atmosphere. As can be seen from Fig. 1, the degassing apparatus 14 is located above the container 10. In the shown construction, the degassing apparatus 14 has an induction (or suction) pipe section 18 and a return pipe section 20. The induction pipe section 18 and the return pipe section 20 are integrally formed with the body of the degassing apparatus 14 and communicate with the degassing chamber 16 at their upper ends. The lower ends of the induction pipe section 18 and the return pipe section 20 are immersed into the molten metal 12 in the container 10. Therefore, the molten metal container 10 and the degassing chamber 14 are connected to each other via the induction pipe section 18 and the return pipe section 20. The molten metal 12 in the container 10 rises up to the degassing chamber 16 via the induction pipe section 18 and recirculates into the container 10 via the return pipe section 20.

A plurality of high pressure gas discharge nozzles 22 and low pressure gas discharge nozzles 24 are provided in induction path 26 defined by the induction pipe section 18. The axes of the nozzles 22 and 24 at least at the gas discharge outlets are directed substantially transversely to the axis of the induction pipe section 18. The high pressure gas discharge nozzles 22 are connected to a high pressure gas source (not shown). Similarly, the low pressure gas discharge nozzles 24 are connected to a low pressure gas source (not shown). As shown, the high and low pressure nozzles 22 and 24 are located at vertically different height positions, as particularly shown in Fig. 2. In the shown embodiment, the high pressure gas discharge nozzles 22 are vertically located at a lower elevation than the low pressure gas discharge nozzles 24 and are circumferentially arranged with given angular intervals. Similarly, the low pressure gas discharge nozzles 24 are circumferentially arranged with given angular intervals at a higher elevation than the high pressure gas discharge nozzles. As can be seen from Fig. 2, the internal diameter of the high pressure gas discharge nozzles 22 is smaller than that of the low pressure gas discharge nozzles 24. The ratio of the diameters of the high pressure gas discharge nozzles 22 and the low pressure gas nozzles 24 is determined in view of the ratio of the gas pressure to be discharged therethrough so that the gas flow rates at the central portion and the circumferential portion of the induction pipe section 18 become even to obtain uniformity of bubble generation at the respective portions.

Though the shown embodiment employs an arrangement where the high and low pressure gas discharge nozzles 22 and 24 are vertically offset, it may be possible to arrange for both the high pressure gas discharge nozzles and the low pressure gas discharge nozzles to be at the same vertical height. Furthermore, although in the shown embodiment, the high pressure gas discharge nozzles are arranged in circumferential alignment at a lower elevation and the low pressure gas discharge nozzles are arranged in circumferential alignment at a higher elevation, it may be possible to arrange for both of the high and low gas pressure discharge nozzles to be at different elevations in a circumferentially alternative arrangement. However, the shown arrangement of nozzles is preferred in view of the avoidance of interference of the high and low pressure gas discharged through the high and low pressure gas discharge nozzles which may otherwise occur.

Concerning the gas flow rate q in the induction pipe section 18, this is proportional to the discharge nozzle diameter d and the discharge gas pressure P. Therefore, the gas flow rate can be calculated by:

$$q = b \times d^i \times P$$

On the other hand, the distance Lh reached by the gas is proportional to the velocity of the gas. The distance Lh can be illustrated by:

$$Lh = a \times (q/d)^j$$
$$= a (b \times d^i \times P/d)^j$$

Since the high pressure gas has to reach the central portion of the induction pipe section 18, the distance Lh can be illustrated by:

$$Lh = D/2$$

On the other hand, the pressure of the high pressure gas is variable depending upon the distance the pressurized gas has to reach since the high pressure gas is intended to be blown into the central portion of the first path. Therefore, the pressure of the high pressure gas may be variable depending upon the diameter of the first path. In a generalized consideration, the gas pressure of the high pressure gas can be illustrated by:

$$P = K \times d^{-(i-2)} \times D^{1/j}$$

where
D is the diameter of the induction pipe section 18;

and
K is 0.15 to 0.8 and is a coefficient obtained through experiments.

In order to determine the optimum values of K, i and j, experiments have been performed. As a result, it has been found that the optimum performance can be obtained in the following condition:
K : 0.15 to 0.8
i : 3.8/d + 2
j : 2/3

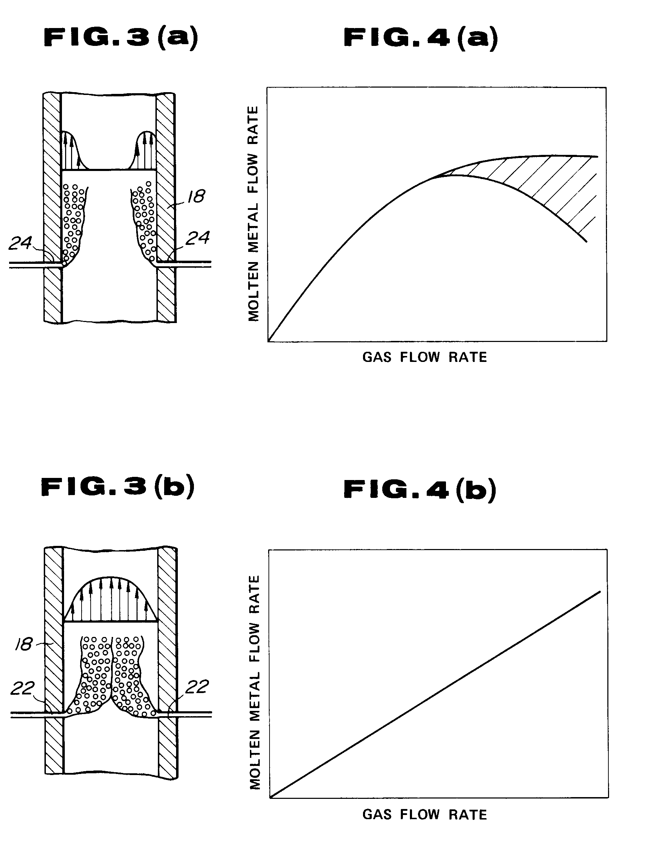

In order to confirm the effect of the gas flow for increasing the molten metal flow rate into the degassing chamber 16, models shown in Figs. 3a and 3b were prepared. The model of Fig. 3a is designed for discharging low pressure gas and the model of Fig. 3b is designed for discharging high pressure gas. Experiments were performed utilizing water as the liquid. As can be seen from Figs. 3a and 3b, depending upon the pressure of the gas being discharged, the radial distance at which bubbles are formed varies.

In Figs. 3a and 3b, arrows show the water flow velocity. Based on the results obtained from the experiments set forth above, the gas pressure to be discharged through the high pressure gas discharge nozzles 22 is set in a range of from 30 to 50 kg/cm$^2$ and the gas pressure to be discharged through the low pressure gas discharge nozzles 24 is set in a range of from 0 to 9.9 kg/cm$^2$ for an induction pipe section 18 having an internal diameter of from 40 to 50 cm.

In a practical degassing operation, the gas flow rate through the high pressure gas discharge nozzles 22 is set at a value of about 1000 Nl/min and the gas flow rate through the low pressure gas discharge nozzles 24 is set in a range of from 1500 to 2000 Nl/min.

With the construction set forth above, the molten metal flow rate in the degassing chamber was increased by about 90% in comparison with that of a conventional apparatus and the period for the degassing treatment could be shortened by about 50%.

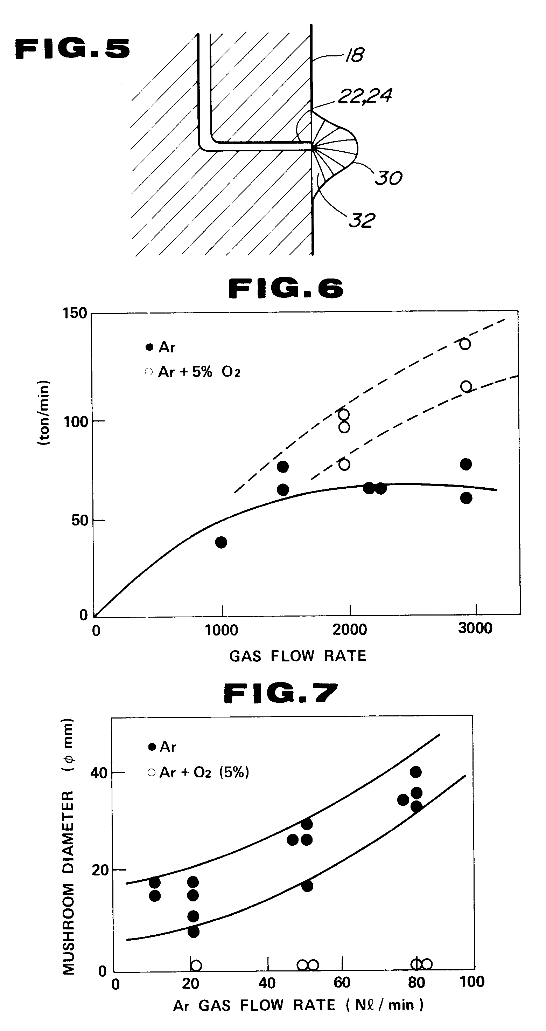

Here, in the aforementioned degassing process, Ar gas has been conventionally used as the inert gas to be blown into the induction path. Discharging of the gas through the gas discharge nozzles 22 and 24 tends to cool the molten metal around the discharge outlet thereof. As a result of cooling the molten metal, a mushroom 30 tends to grow around the discharge outlet of the nozzle (Figure 5). When the mushroom 30 grows around the discharge outlet of the nozzle, the pressurized gas has to flow through small diameter openings 32. Since the internal diameter of the openings 32 is substantially small and constitutes a resistance to gas flow, the discharge pressure of the gas may be lowered to such an extent that it is insufficient to reach the central portion of the induction path even when high pressure gas is supplied.

In order to prevent the mushroom from being grown around the discharge outlet of the gas discharge nozzles, a preferred embodiment of the degassing apparatus employs an inert gas, such as Ar gas containing a given amount e.g. in a range of from 0.1 to 20.0%, preferably in a range of from 1.0 to 5.0%, of $O_2$. Fig. 7 shows the diameter of mushrooms formed during gas blowing. As can be seen from Fig. 7, when Ar gas not containing $O_2$ is used, the diameter of the mushroom increases as the gas flow rate increases. On the other hand, when the inert gas contains $O_2$, the diameter of the mushroom can be held substantially smaller.

For confirming the performance of the degassing apparatus set forth above, a degassing operation was performed for molten metal in a ladle having a volume of 250 tons using varying gas flow rate. Experiments were performed using Ar gas containing no $O_2$ gas and Ar gas with 5% of $O_2$ to check the molten metal flow rate in an induction pipe section having an internal diameter of 550 mm. The molten metal flow rate to the degassing chamber 16 relatively to the gas flow rate was substantially constant at a gas flow rate greater than 1500 Nl/min when pure Ar gas was used. On the other hand, in case of the $O_2$ containing Ar gas, the molten metal flow rate increased with increasing gas flow rate even at a gas flow rate greater than 1500 Nl/min, as shown in Fig. 6.

This confirms that $O_2$ contained in the inert gas is effective for suppressing the growing of mushrooms around the discharge outlets of the gas discharge nozzles.

## Claims

1. A method for blowing gas into molten metal in an apparatus for degassing molten metal which includes a container (10) containing a molten metal, a degassing chamber (16) arranged above the container and connected to a vacuum source, a first path (18) (26) for supplying the molten metal from the container to the degassing chamber, a second path (20) for returning the molten metal from the degassing chamber to the container, and first and second gas discharge nozzles (22,24) connected to the first path upstream of the degassing chamber for discharging gas into the molten metal, said method comprising the steps of:

   reducing the pressure in said degassing chamber by means of said vacuum source;

   introducing a high pressure gas into said first path through said first gas discharge nozzles (22), and

   introducing a low pressure gas into said first path through said second gas discharge nozzles

   characterised in that the pressures of said high pressure gas and said low pressure gas are controlled independently of each other so as to establish a uniform distribution of gas across said first path.

2. A method according to claim 1, wherein said high pressure gas and said low pressure gas are discharged transversely to the flow direction of said molten metal at the position where said high pressure gas and said low pressure gas are introduced into the molten metal.

3. A method according to claim 1 or 2, wherein said high and low pressure gases comprise inert gas.

4. A method according to claim 3, wherein said high and low pressure gases additionally contain oxygen.

5. A method according to any preceding claim, wherein the pressure of said high pressure gas is in a range defined by:

$$P = K \times d^{-(i-2)} \times D^{1/j}$$

   where
   P is the gas pressure ($kg/cm^2$);
   K is in a range of 0.15 to 0.80
   i is $3.8/d + 2$
   j is 2/3
   d is the discharge nozzle diameter
   D is the diameter of the first path

6. A method according to any preceding claim, wherein the pressure of said high pressure gas is in the range of from 30 $kg/cm^2$ to 50 $kg/cm^2$ and the pressure of said low pressure gas is in a range of from the static pressure of the molten metal to 9.9 $kg/cm^2$.

7. A method according to any preceding claim wherein said first gas discharge nozzles define a smaller gas flow area than said second gas discharge nozzles.

8. An apparatus for degassing molten metal comprising:

   a container (10) for containing molten metal;

   a degassing chamber (16) arranged above said container and connected to a vacuum source for maintaining a vacuum in the container;

   a first path (18) (26) for supplying said molten metal from said container to said degassing chamber;

a second path (20) for returning said molten metal from said degassing chamber to said container;

a high pressure gas discharging means (22) for discharging a high pressure gas into said molten metal in said first path,

a low pressure gas discharging means (24) for discharging a low pressure gas into said molten metal in said first path, and

means to control the pressures of said high pressure gas and said low pressure gas independently of each other characterised in that

said high pressure gas discharging means (22) has a smaller gas flow area than that of said low pressure gas discharging means (24).

9. An apparatus as claimed in claim 8, wherein said high pressure gas discharging means comprises a plurality of first nozzles arranged in circumferential alignment and said low pressure gas discharging means comprises a plurality of second nozzles in circumferential alignment.

10. An apparatus as claimed in claim 9, wherein said first and second nozzles are vertically arranged at mutually different elevations.

11. An apparatus as claimed in claim 10, wherein said first nozzles are located at a lower elevation than said second nozzles.

12. An apparatus as claimed in claim 9, 10 or 11, wherein said first and second nozzles have axes extending substantially transversely to the axis of said first path.

13. An apparatus as claimed in any one of claims 8 to 12, wherein the apparatus comprises supplies of high pressure gas and low pressure gas and said high pressure and low pressure gases comprise inert gas.

14. An apparatus as claimed in claim 13, wherein said high and low pressure gases contain oxygen.

15. An apparatus as claimed in any one of claims 8 to 14, wherein the apparatus comprises supplies of high pressure gas and low pressure gas, the pressure of said high pressure gas is in a range of from 30 kg/cm$^2$ to about 50 kg/cm$^2$, and the pressure of said low pressure is in a range of from the static pressure of the molten metal to 9.9 kg/cm$^2$.

16. An apparatus as claimed in claim 9 or any one of claims 10 to 15 when appendant to claim 9, adapted so that the pressure of said high pressure gas is in a range defined by:

$$P = K \times d^{-(i-2)} \times D^{1/j}$$

where
P is the gas pressure (kg/cm$^2$);
K is in a range of 0.15 to 0.80
i is 3.8/d + 2
j is 2/3
d is the discharge nozzle diameter (mm); and
D is the diameter of the first path

**Patentansprüche**

1. Verfahren zum Einblasen von Gas in Metallschmelze in einer Vorrichtung zur Entgasung von Metallschmelze, welche einen Metallschmelze enthaltenden Behälter (10), eine Entgasungskammer (16), die über dem Behälter angeordnet und mit einer Vakuumquelle verbunden ist, einen ersten Weg (18) (26) für die Zuführung der Metallschmelze von dem Behälter zu der Entgasungskammer, einen zweiten Weg (20) für die Rückführung der Metallschmelze von der Entgasungskammer zu dem Behälter, sowie erste und zweite Gasauslaßdüsen (22, 24), die zur Abgabe von Gas in die Metallschmelze stromaufwärts der Entgasungskammer mit dem ersten Weg verbunden sind, aufweist, mit folgenden Verfahrensschritten:
Reduzierung des Druckes in der Entgasungskammer mittels der Vakuumquelle;
Einbringen eines unter hohem Druck stehenden Gases in den ersten Weg durch die ersten Gasauslaßdüsen (22), und
Einbringen eines unter niedrigem Druck stehenden Gases in den ersten Weg durch die zweiten Gasauslaßdüsen,
dadurch gekennzeichnet, daß die Drücke des unter hohem Druck stehenden Gases und des unter niedrigem Druck stehenden Gases unabhängig voneinander geregelt werden, so daß eine gleichmäßige Gasverteilung über den ersten Weg erreicht wird.

2. Verfahren nach Anspruch 1, wobei das unter hohem Druck stehende Gas und das unter niedrigem Druck stehende Gas an einer Stelle, an der das unter hohem Druck stehende Gas und das unter niedrigem Druck stehende Gas in die Metallschmelze eingebracht werden, quer zu der Fließrichtung der Metallschmelze austreten.

3. Verfahren nach Anspruch 1 oder 2, wobei die unter hohem und unter niedrigem Druck stehenden Gase Inertgas aufweisen.

4. Verfahren nach Anspruch 3, wobei die unter hohem und unter niedrigem Druck stehenden Gase zusätzlich Sauerstoff enthalten.

5. Verfahren nach einem der vorhergehenden Ansprüche, wobei der Druck des unter hohem Druck stehenden Gases in einem wie folgt definierten Bereich liegt:

$$P = K \times d^{-(i-2)} \times D^{1/j}$$

wobei gilt:
P ist der Gasdruck ($kg/cm^2$);
K liegt im Bereich von 0,15 bis 0,80
i ist 3,8/d + 2
j ist 2/3
d ist der Abgabedüsendurchmesser
D ist der Durchmesser des ersten Weges.

6. Verfahren nach einem der vorhergehenden Ansprüche, wobei der Druck des unter hohem Druck stehenden Gases im Bereich von 30 $kg/cm^2$ bis 50 $kg/cm^2$ liegt und der Druck des unter niedrigem Druck stehenden Gases in einem Bereich zwischen dem statischen Druck der Metallschmelze und 9,9 $kg/cm^2$ liegt.

7. Verfahren nach einem der vorhergehenden Ansprüche, wobei die ersten Gasauslaßdüsen eine geringere Gasdurchflußfläche begrenzen als die zweiten Gasauslaßdüsen.

8. Vorrichtung zur Entgasung von Metallschmelze mit:
einem Behälter (10) zur Aufnahme von Metallschmelze;
einer Entgasungskammer (16), die über dem Behälter angeordnet und zur Aufrechterhaltung eines Vakuums in dem Behälter mit einer Vakuumquelle verbunden ist;
einem ersten Weg (18) (26) für die Zuführung der Metallschmelze von dem Behälter zu der Entgasungskammer;
einem zweiten Weg (20) für die Rückführung der Metallschmelze von der Entgasungskammer zu dem Behälter;
einer Hochdruckgasabgabeeinrichtung (22) zur Abgabe eines unter hohem Druck stehenden Gases in die Metallschmelze in dem ersten Weg;
Niederdruckgasauslaßeinrichtungen (24) zur Abgabe eines unter niedrigem Druck stehenden Gases in die Metallschmelze in dem ersten Weg, und
Einrichtungen zur Regelung der Drücke des unter hohem Druck stehenden Gases und des unter niedrigem Druck stehenden Gases unabhängig voneinander,
dadurch gekennzeichnet,
daß die Hochdruckgasabgabeeinrichtung (22) eine geringere Gasdurchflußfläche aufweist als die der Niederdruckgasabgabeeinrichtung (24).

9. Vorrichtung nach Anspruch 8, wobei die Hochdruckgasabgabeeinrichtung eine Vielzahl erster Düsen aufweist, die in Umfangsrichtung ausgerichtet sind, und wobei die Niederdruckgasabgabeeinrichtung eine Vielzahl von zweiten Düsen aufweist, die in Umfangsrichtung ausgerichtet sind.

10. Vorrichtung nach Anspruch 9, wobei die ersten und zweiten Düsen an zueinander unterschiedlichen vertikalen Höhen angeordnet sind.

11. Vorrichtung nach Anspruch 10, wobei die ersten Düsen in einer niedrigeren Höhe angeordnet sind als die zweiten Düsen.

12. Vorrichtung nach Anspruch 9, 10 oder 11, wobei sich die Achsen der ersten und zweiten Düsen im wesentlichen quer zu der Achse des ersten Weges erstrecken.

13. Vorrichtung nach einem der Ansprüche 8 bis 12, wobei die Vorrichtung Vorräte an unter hohem Druck und an unter niedrigem Druck stehenden Gas aufweist und wobei die unter hohem Druck und die unter niedrigem Druck stehenden Gase Inertgas aufweisen.

14. Vorrichtung nach Anspruch 13, wobei die unter hohem und die unter niedrigem Druck stehenden Gase Sauerstoff enthalten.

15. Vorrichtung nach einem der Ansprüche 8 bis 14, wobei die Vorrichtung Vorräte an unter hohem Druck stehenden und an unter niedrigem Druck stehenden Gas aufweist, der Druck des unter hohem Druck stehenden Gases in einem Bereich von 30 $kg/cm^2$ bis ungefähr 50 $kg/cm^2$ liegt, und der Druck des unter niedrigem Druck stehenden Gases in einem Bereich von dem statischen Druck der Metallschmelze bis 9,9 $kg/cm^2$ liegt.

16. Vorrichtung nach Anspruch 9 oder einem der Ansprüche 10 bis 15, soweit diese von Anspruch 9 abhängen, welche so ausgelegt ist, daß der Druck des unter hohem Druck stehenden Gases in einem wie folgt definierten Bereich liegt:

$P = K \times d^{-(i-2)} \times D^{1/j}$,

wobei gilt:
P ist der Gasdruck (kg/cm$^2$);
K liegt im Bereich von 0,15 bis 0,80;
i ist 3,8/d + 2;
j ist 2/3
d ist der Abgabedüsendurchmesser (mm); und
D ist der Durchmesser des ersten Weges.

**Revendications**

1. Un procédé pour injecter du gaz dans du métal à l'état fondu dans un appareil de dégazage de métal à l'état fondu et incluant un conteneur (10) contenant le métal à l'état fondu, une chambre de dégazage (16) disposée au-dessus du conteneur et connectée à une source de vide, un premier passage (18) (26) pour alimenter le métal fondu du conteneur vers la chambre de dégazage, un second passage (20) pour renvoyer le métal à l'état fondu de la chambre de dégazage vers le conteneur, et des premières et secondes buses de décharge de gaz (22, 24) connectées au premier passage ascendant, de la chambre de dégazage pour décharger du gaz dans le métal à l'état fondu, ledit procédé comprenant les étapes de:
   - réduction de la pression dans ladite chambre de dégazage au moyen de ladite source de vide;
   - introduction du gaz à haute pression dans ledit premier passage au travers desdites premières buses de décharge de gaz (22), et
   - introduction d'un gaz sous basse pression dans ledit premier passage au travers desdites secondes buses de décharge de gaz
   caractérisé en ce que les pressions du gaz sous haute pression et du gaz sous basse pression sont contrôlées indépendamment l'une de l'autre et sont établies par une distribution uniforme de gaz à travers ledit le premier passage.

2. Un procédé selon la revendication 1, dans lequel ledit gaz sous haute pression et ledit gaz sous basse pression sont déchargés transversalement à la direction d'écoulement dudit métal à l'état fondu, en des positions où lesdits gaz sous haute pression et lesdits gaz sous basse pression sont introduit dans le métal à l'état fondu.

3. Un procédé selon la revendication 1 ou 2, dans lequel lesdits gaz sous basse et haute pression comprennent du gaz inerte.

4. Un procédé selon la revendication 3, dans lequel lesdits gaz sous basse et haute pressions contiennent en plus de l'oxygène.

5. Un procédé selon l'une quelconque des revendications précédentes, dans lequel la pression dudit gaz sous haute pression est dans l'intervalle défini par :

   $P = K \times d^{-(i-2)} \times D^{1/j}$

   dans laquelle:
   P est la pression du gaz (kg/cm$^2$)
   K varie de 0,15 à 0,80
   i vaut 3,8/d + 2
   J vaut 2/3
   d est le diamètre de la buse de décharge
   D est le diamètre du premier passage.

6. Un procédé selon l'une quelconque des revendications précédentes, dans lequel la pression du gaz sous haute pression est dans l'intervalle de 30 à 50 kg/cm$^2$ et la pression dudit gaz sous basse pression est comprise dans l'intervalle de la pression statique de métal à l'état fondu et 9,9 kg/cm$^2$.

7. Un procédé selon l'une quelconque des revendications précédentes, dans lequel lesdites premières buses de décharge de gaz définissent une aire d'écoulement de gaz plus faible que les secondes buses de décharge de gaz.

8. Un appareil pour dégazer du métal à l'état fondu comprenant :
   - un conteneur (10) pour contenir du métal à l'état fondu ;
   - une chambre de dégazage (16) disposée au-dessus dudit conteneur et connectée à une source de vide pour maintenir un vide dans le conteneur;
   - un premier passage (18, 26) pour alimenter ledit métal fondu dudit conteneur vers ladite chambre de dégazage;
   - un second passage (20) pour renvoyer ledit métal fondu de ladite chambre de dégazage vers ledit conteneur;
   - un moyen de décharge de gaz sous haute pression (22) pour décharger un gaz sous haute pression dans ledit métal à l'état fondu au niveau dudit premier passage;
   - un moyen de décharge de gaz sous basse pression (24) pour décharger un gaz sous basse pression dans ledit métal à l'état fondu au niveau dudit premier passage; et
   - des moyens de contrôle de pression dudit gaz sous haute pression et dudit gaz sous basse pression indépendamment l'un de l'autre,

caractérisé en ce que ledit moyen de décharge de gaz sous haute pression (22) a une aire d'écoulement de gaz inférieure à celle du moyen de décharge de gaz à basse pression (24).

9. Un appareil selon la revendication 8, dans lequel ledit moyen de décharge de gaz sous haute pression comprend une pluralité de premières buses disposées de façon circonférentielle et ledit moyen de décharge de gaz sous basse pression comprend une pluralité de secondes buses disposées de façon circonférentielle.

10. Un appareil selon la revendication 9, dans lequel lesdites premières et secondes buses sont disposées verticalement à des hauteurs différentes.

11. Un appareil selon la revendication 10, dans lequel lesdites premières buses sont disposées à une hauteur inférieure à celle desdites secondes buses.

12. Un appareil selon la revendication 9, 10 ou 11, dans lequel lesdites premières et secondes buses ont des axes s'étendant sensiblement transversalement par rapport à l'axe dudit premier passage.

13. Un appareil selon l'une quelconque des revendications 8 à 12 dans lequel l'appareil comprend la fourniture de gaz sous haute pression et de gaz sous basse pression et lesdits gaz sous haute et basse pressions comprennent du gaz inerte.

14. Un appareil selon la revendication 13, dans lequel lesdits gaz sous haute et basse pressions contiennent de l'oxygène.

15. Un appareil selon l'une quelconque des revendications 8 à 14, dans lequel l'appareil comprend la fourniture du gaz à haute pression et du gaz à basse pression, la pression dudit gaz sous haute pression étant dans l'intervalle de 30 à 50 kg/cm², et la pression dudit gaz sous basse pression étant comprise entre la pression statique du métal fondu et 9,9 kg/cm² .

16. Un appareil selon la revendication 9, ou l'une quelconque des revendications 10 à 15 lorsqu'elles sont dépendantes de la revendication 9, adapté de sorte que la pression dudit gaz sous haute pression est dans un domaine défini par :

$$P = K \times d^{-(i-2)} \times D^{1/j}$$

dans laquelle:
P est la pression du gaz (kg/cm²)
K varie de 0,15 à 0,80
i vaut 3,8/d + 2
J vaut 2/3
d est le diamètre de la buse de décharge; et
D est le diamètre du premier passage.

**FIG.1**

**FIG.2**

# FIG. 3 (a)

# FIG. 4 (a)

MOLTEN METAL FLOW RATE

GAS FLOW RATE

# FIG. 3 (b)

# FIG. 4 (b)

MOLTEN METAL FLOW RATE

GAS FLOW RATE

13

**FIG.5**

**FIG.6**

GAS FLOW RATE

**FIG.7**

Ar GAS FLOW RATE ( Nℓ / min )